(19) Europäisches Patentamt
European Patent Office
Office européen des brevets

(11) EP 0 594 033 B1

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(51) Int Cl.6: **F16C 39/06**

(21) Anmeldenummer: **93116462.8**

(22) Anmeldetag: **12.10.1993**

(54) **Wirbelstrominduzierende Magnetlager**

Eddy current induced magnetic bearing

Courant de Foucault induit par palier magnétique

(84) Benannte Vertragsstaaten:
**AT BE CH DE FR GB IT LI NL**

(30) Priorität: **22.10.1992 SE 9203090**

(43) Veröffentlichungstag der Anmeldung:
**27.04.1994 Patentblatt 1994/17**

(73) Patentinhaber: **Pfeiffer Vacuum GmbH
35614 Asslar (DE)**

(72) Erfinder: **Lembke, Tornbjörn
S-75426 Uppsala (SE)**

(56) Entgegenhaltungen:
DE-A- 1 814 903          DE-A- 2 258 324
US-A- 2 585 714          US-A- 3 811 740
US-A- 4 988 906

## Beschreibung

Die vorliegende Erfindung betrifft eine Vorrichtung für eine magnetische Lagerung, bestehend aus mindestens einer Stabilisierungsvorrichtung und vorzugsweise mindestens einer Entlastungsvorrichtung zur Aufnahme beispielsweise des Eigengewichts einer Welle bzw. statischer Kräfte

Unter einem magnetischen Lager ist ein Lager zu verstehen, bei dem die rotierende Welle keinerlei mechanischen Kontakt mit dem Lagergehäuse hat. Stattdessen werden magnetische Kräfte benutzt, um die Welle an Ort und Stelle zu halten.

Magnetlager existieren in einer Anzahl von verschiedenen Ausführungen. Eine Ausführung basiert darauf, daß entgegengerichtete Permanentmagnete abstoßende Kräfte bewirken, die dazu benutzt werden, die Welle in der gewünschten Position zu halten. Abb. la zeigt ein solches Lager als Axiallager und Abb. 1b als Radiallager. Der Nachteil dieses Lagertyps ist, daß man die Welle nie in allen Richtungen gleichzeitig zentrieren kann. Wenn man die Welle radial zentriert, wird sie automatisch in axialer Richtung instabil sein und umgekehrt. Es ist schon seit langer Zeit rein mathematisch im "Earnshaws Theorem" bewiesen, daß eine solche Vorrichtung niemals in allen drei Dimensionen gleichzeitig stabil sein kann. Diese Lager werden also immer zusammen mit einem Stützlager irgendeiner Art angewandt. Es ist das Ziel der vorliegenden Erfindung, eine Lagerungsvorrichtung zustande zu bringen, die in allen Richtungen völlig stabil ist und keinerlei Stützlager während des Betriebs erfordert.

In einem anderen Typ von Magnetlager, beispielsweise bei "Actidyn", das von S2M in Frankreich hergestellt wird, wird der Rotor aus Weicheisen von mehreren aktiv geregelten Elektromagnete getragen. Eventuelle Abweichungen von der Sollposition der Welle werden von Sensoren registriert, die über ein Reglersystem die Elektromagnete so beeinflussen, daß die Welle zurückgesteuert wird. Dieses Lager ist sehr teuer, besitzt aber auf der anderen Seite eine sehr hohe Präzision. Es braucht nicht geschmiert zu werden, ist fast geräusch- und schwingungsfrei, besitzt eine hohe Steifheit und kann beträchtlich schneller rotieren, als zum Beispiel ein Kugellager. In den Fällen, in denen man diese Eigenschaften zwar wünscht, sie aber nicht unbedingt braucht oder in denen man diese hohe Präzision nicht haben will, sondern wo eine weichere Wellenaufhängung erwünscht ist, kann man durch Weglassung der Steuerelektronik die Kosten nicht senken. Das Lager würde dann überhaupt nicht funktionieren. Die vorliegende Erfindung hat sämtliche Eigenschaften, die soeben angeführt sind, die Aufhängung ist jedoch weich statt steif. Eine Steuerelektronik ist nicht erforderlich. Ein weiterer Nachteil von Actidyn ist, daß man hochfrequente Schwingungen in die Welle induzieren kann. Dies geschieht bei der vorliegenden Erfindung nicht. Das letztgenannte Lager kann darüber hinaus mit einer noch höheren Drehzahl als Actidyn laufen, da ein Aluminiumrotor zur Anwendung kommen kann, während bei Actidyn ein Weicheisenrotor erforderlich ist.

In letzter Zeit ist auf die Möglichkeit hingewiesen worden, stabile, sehr hochwertige Lager mit Hilfe des sogenannten "Meissnereffektes", der in Supraleitern auftritt, zu bauen. Es ist im Prinzip möglich, diese Lager zu bauen, aber sie benötigen einerseits eine spezielle Kühlanlage, um die extrem niedrigen Temperaturen, die der Supraleiter braucht, aufzubringen, andererseits können sie nie in den Bereich der Drehzahl kommen, der mit der vorliegenden Erfindung möglich ist. Die Ursache für deren beschränkte Maximaldrehzahl ist, daß sie entweder einen rotierenden Magneten oder einen rotierenden Supraleiter brauchen. Keiner von diesen hat jedoch die erforderliche hohe Festigkeit und geringe Dichte. Aluminium dagegen, vor allem Dural, hat diese Eigenschaften, die für hohe Drehzahlen notwendig sind, beide, da bei einer rotierenden Scheibe für die maximale Umfangsgeschwindigkeit $v_{max}$ folgendes gilt:

$$v_{max} = \sqrt{(\sigma_{max}/\rho)} \qquad [m/s]$$

und für ein rotierendes Rohr, daß:

$$v_{max} = \sqrt{(\sigma_{max}/(0{,}4125\,\rho))} \qquad [m/s]$$

wobei $\sigma_{max}$ die zulässige Zugspannung im Material und $\rho$ die Dichte ist. Auch $TiB_2$ kann ein geeignetes Material sein.

Ein weiterer Lagertyp, welcher für hohe Drehzahlen zum Einsatz kommen kann, ist das sogenannte Gaslager. Dieses Lager erfordert beträchtlich höhere Genauigkeit bei der Herstellung, als es bei der vorliegenden Erfindung der Fall ist und wird entsprechend teurer. Es erfordert darüber hinaus einen Kompressor und einen Luftfilter.

Zum gattungsgemäßen Stand der Technik gehört auch die US-Patentschrift 3,811,740. Hier wird ein Magnetlager vorgestellt, bei welchem zwischen zwei paarweise angeordneten Magnetscheiben eine Scheibe aus unmagnetischem elektrisch leitenden Material angeordnet ist. Die von den Magneten in der elektrisch leitenden Scheibe induzierten, parasitären Wirbelströme erzeugen magnetische Lagerkräfte, die die Lage stabilisieren.

Alle vorgenannten Lager haben also außer einem hohen Preis auch Eigenschaften, die sie ungeeignet oder zumindest unnötig kompliziert machen, um in vielen Anwendungen, wo hohe Drehzahlen und eine weiche Aufhängung erwünscht sind, zum Einsatz zu kommen. Die vorliegende Erfindung löst diese und andere Probleme, erfordert keinerlei Peripherieausrüstung und ist in der Herstellung beträchtlich billiger. Die Lösung wird durch die kennzeichnenden Merkmale des 1. Patentanspruches dargestellt. Bevorzugte Ausführungsformen werden in den Unteransprüchen genannt.

Das Prinzip eines Magnetlagers kann wie folgt kurz so dargestellt werden:

Für ein Kräftegleichgewicht ist es erforderlich, daß die auf die Welle wirkenden Kräfte einschließlich des Gewichts der Welle ganz von magnetischen Lagerkräften aufgefangen werden. Für ein ungeregeltes Lager vom Typ Gaslager oder Magnetlager, das aus entgegengerichteten Magneten besteht, beinhaltet das, daß die Welle von ihrer ursprünglichen Position in axialer und/oder radialer Richtung verschoben werden muß, bis ein neues Gleichgewicht eintritt. Für ein geregeltes Lager - wie Actidyn dagegen - fühlen Sensoren, wo sich die Welle befindet und geben dann Signale, die die Welle in ihre ursprüngliche Position zurücksteuern. Der letztgenannte Typ kann also die gewünschte Stabilität und die gewünschte Dämpfung der von Störungen verursachten Schwingungen bewirken, während das ungeregelte Lager selbst in seine neue Gleichgewichtsposition schwenken muß. Schwingungen können in einem ungeregelten Magnetlager beispielsweise dadurch gedämpft werden, daß die Statormagnete in weichem Gummi in einer sehr komplizierten Anordnung aufgehängt werden.

Man kann die vorliegende Erfindung als ein Zwischending zwischen einem geregelten und einem ungeregelten Lager bezeichnen. Ein äußeres Steuersystem ist nicht erforderlich, sondern das Lager ist im Prinzip, dank der Ausnutzung des Induktionsgesetzes von Lenz, selbstregelnd. Die vorliegende Erfindung baut auf dem selben Prinzip auf wie der japanische Magnetschwebezug, nämlich daß, wenn ein Magnet, ungeachtet dessen, ob es sich dabei um einen supraleitenden Magneten wie bei dem Zug handelt oder beispielsweise einen Permanentmagneten, über eine elektrisch leitende Fläche geführt wird, Wirbelströme auf solche Weise in der Fläche induziert werden, daß das Magnetfeld aus diesen zu abstoßenden Kräften zwischen dem Magnet und der Fläche führt. Wenn sich nun der Magnet der Fläche nähert, nimmt die Größe der induzierten Ströme zu.

Man kann dies so beschreiben, daß das Metall in der Fläche einen Magneten mit variabler Magnetisierung darstellt. Gerade diese Tatsache ist die Voraussetzung dafür, daß man das Earnshaws Theorem umgeht, das besagt, daß "es unmöglich ist, bei einem in einem Magnetfeld schwebenden Körper eine dreidimensionale Stabilität zu erreichen, wenn dieser eine konstante Magnetisierung hat." Wir erhalten also ein eingebautes, automatisches Reglersystem. Genau dies wird nun benutzt, um stabile Axial- und Radiallager zu bauen. Die Erfindung wird eingehender unter Hinweis auf die beiliegenden Abbildungen beschrieben. Es zeigen

Abb. 1a     ein bekanntes magnetisches Axiallager,

Abb. 1b     ein bekanntes magnetisches Radiallager,

Abb. 2a     eine Entlastungsvorrichtung für statische Lasten,

Abb. 2b     eine Variante der Entlastungsvorrichtung für statische Lasten,

Abb. 3     ein bekanntes Axiallager mit dickem dazwischenliegendem Material (Rotor),

Abb. 4     ein Axiallager mit dünnem, dazwischenliegendem Material (Rotor),

Abb. 5a     eine Vorrichtung in Form eines magnetischen Axiallagers,

Abb. 5b     eine Vorrichtung in Form eines magnetischen Radiallagers,

Abb. 6     ein Beispiel für eine vollständige Lagerung einer Welle mit zwei Radiallagern, einem Axiallager und mindestens einer Entlastungsvorrichtung,

Abb. 7     ein Beispiel für die Anwendung der Vorrichtung als Linearlager.

Das Axiallager 10 (Abb. 5a) wird wie folgt hergestellt: Die genannte Fläche wird als eine rotierende Scheibe 1 aus Kupfer oder einer Aluminiumlegierung, bevorzugt SIS 4212 oder Dural, gefertigt. Das Zentrum der Scheibe wird als eine mechanische Stütze im Stillstand hergestellt, um die Magneten zu schützen. Rund um Scheibe 1 befinden sich auf jeder Seite Magnethalter für rechteckige SmCo-Magnete 7. Wenn die Magnethalter aus Eisen hergestellt sind, dringt das Magnetfeld nicht in die Umgebung (wenn die Magnete 7 wie unten montiert werden), was bei gewissen Anwendungen von Vorteil ist. Die Wahl von SmCo-Magneten beruht darauf, daß sie eine hohe Koerzitivkraft haben und hohen Temperaturen standhalten. In Zukunft kann man sich vorstellen, daß NeFeB-Magnete eine verbesserte Wärmeverträglichkeit aufweisen. Diese sollten dann preiswerter und eventuell besser als SmCo-Magnete anwendbar sein. Die Magnete 7 werden so in den Haltern montiert, daß sie abwechselnd mit ihrem Süd- oder Nordpol zur Scheibe 1 hinzeigen. Dies hat zwei Vorteile: Einerseits wird eine Lekkage des Magnetfeldes verhindert, wenn Eisen in den Haltern zur Anwendung kommt, andererseits werden die Magnetkräfte etwas stärker, vor allem, wenn sie nahe aneinander montiert werden. Ein weiterer Vorteil könnte erzielt werden, wenn die Magnete 7 nicht rechteckig hergestellt würden, sondern als Sektoren ausgeschnitten aus einem Ringmagnet. Dies wird aber die Herstellkosten ungünstig beeinflussen.

Der Vorteil wäre in diesem Fall, daß die Geschwindigkeit, im Bereich der größeren Breite der Magnete zunehmen würde. Dies würde das Verhältnis zwischen der Tragkraft und der Bremskraft (weiter im Text "Reibungsziffer" genannt) verringern. Eine weitere Verbesserung läßt sich erzielen, wenn die Scheibe 1 konisch hergestellt wird, so daß sie zum Zentrum hin etwas breiter wird als an der Peripherie. Auch dies verringert die "Reibungsziffer" und steigert die Haltbarkeit und die Wärmeleitfähigkeit.

Ein Radiallager 20 wird auf entsprechende Weise hergestellt. Um Wirbelströme auszuschalten, befinden sich gegenüber einem Hohlzylinder 2 sowohl innerhalb als auch außerhalb der Zylinderwand Magnetanordnungen 8 (Abb. 5b). Wären Magnetanordnungen nur außerhalb der Zylinderwand angeordnet, und der Zylinder nicht als Hohlzylinder ausgebildet, käme es zu starken Wirbelströmen, welche große Reibungsverluste und unsymmetrische Radialkräfte auf den Rotor verursachen würden. Dies soll im folgenden näher erläutert werden.

Für eine dicke Scheibe oder einen dickwandigen Hohlzylinder sind die maximal zulässige Last, die Federkonstante sowie die Reibung hauptsächlich abhängig von der Form und der Größe der Magnete, von deren Abstand zum Rotor, der Leitfähigkeit im Rotor sowie der Geschwindigkeit des Rotors relativ zu den Magneten. Der japanische Magnetschwebezug, der auf demselben Prinzip beruht, hat supraleitende Magnete, die im Zug montiert sind und die sich über (nicht auf beiden Seiten wie in unserem Fall) eine Kupfer-"Schiene" bewegen, was zu einer relativ geringen Reibungsziffer führt, da die Geschwindigkeit einerseits hoch ist (ca. 150 m/s), andererseits der Abstand zwischen den Magneten und den Schienen groß ist (ca. 15 cm). Die Reibungsziffer sinkt nämlich mit der Geschwindigkeit, dem Abstand und der Leitfähigkeit.

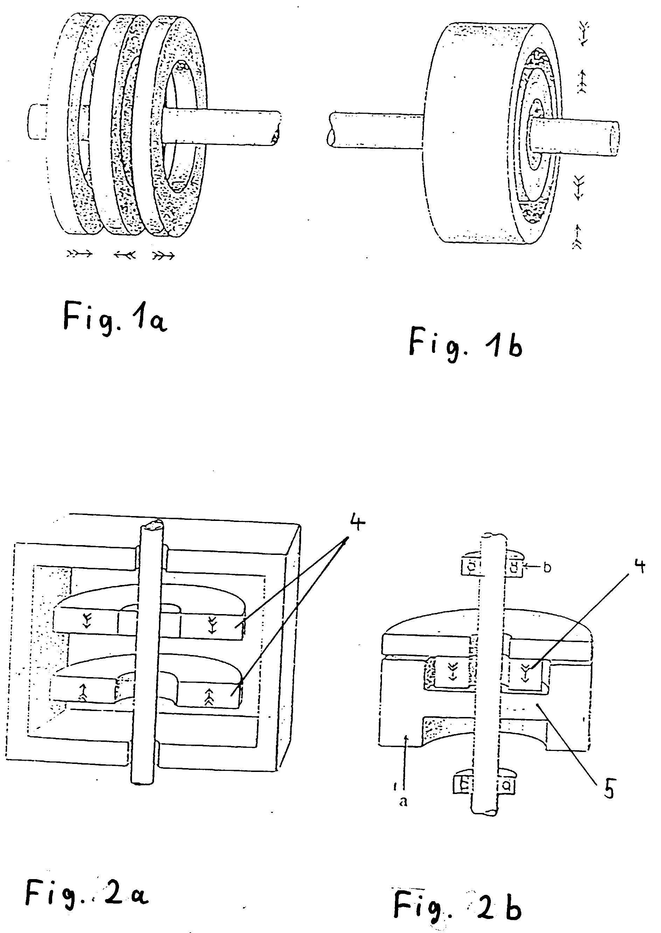

Im vorliegenden Beispiel haben wir eine Rotationsbewegung statt einer Linearbewegung, was nach den o.a. Formeln die Maximalgeschwindigkeit begrenzt. Kupfer, das Strom sehr gut leitet, ist nicht für hohe Drehzahlen geeignet. Stattdessen benutzten wir Aluminium, wenn sehr hohe Drehzahlen gewünscht werden. Darüber hinaus muß die Welle ziemlich gut zentriert sein, was zur Forderung nach einer gewissen Steifheit führt, was wiederum dazu führt, daß die Magnete nahe an der Scheibe angebracht werden müssen (ca. 1 - 2 mm). All dies bedingt eine sehr hohe Reibungsziffer, von 0,5 bis 6, was nicht akzeptabel ist. Ein Lager mit der eben genannten dicken Scheibe ist in dem US-Patent 3.811.740 beschrieben. Daß die Scheibe dick ist, geht deutlich aus Abb. 1 hervor, aber auch aus der in Spalte 6, Zeile 25-27, beschriebenen Funktion. In der vorliegenden Erfindung wurde die dicke Scheibe durch eine sehr dünne Scheibe ersetzt, wobei die Dicke genau berechnet wurde. Das gleiche gilt für die Wandstärke der Hohlzylinder bei der radialen Anordnung. Die Reibung konnte auf diese Weise fast ganz eliminiert werden, was neu ist und als wesentlich für die Lösung der Aufgabe angesehen werden muß.

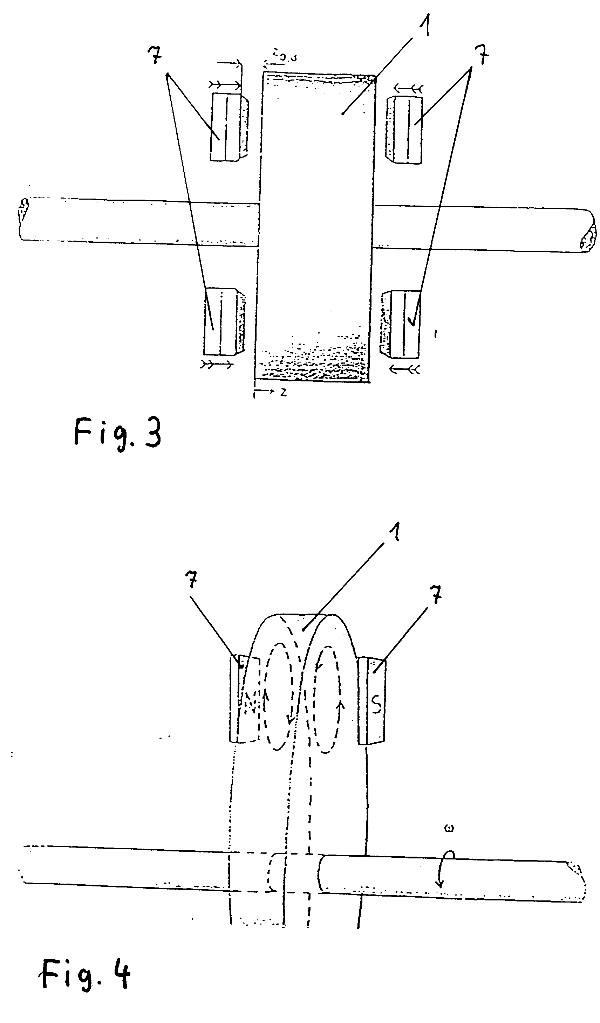

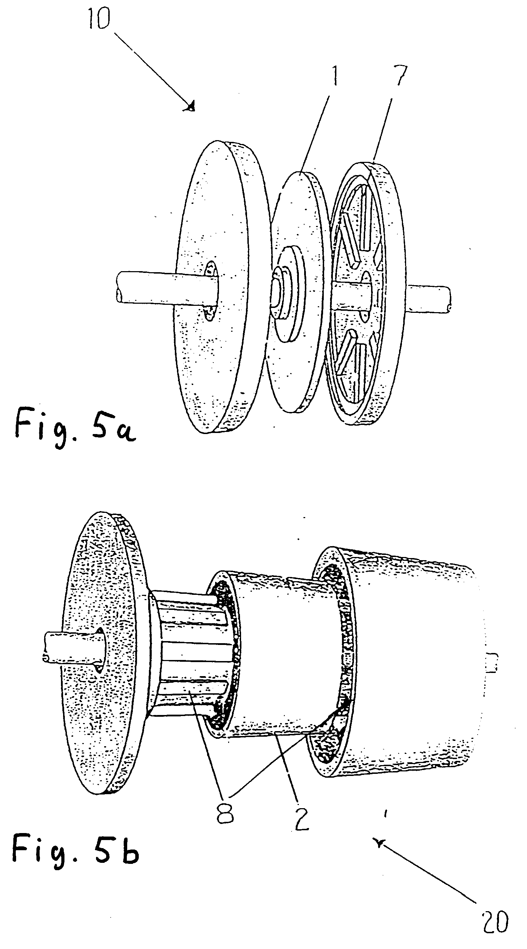

Abb. 3 zeigt ein Axiallager mit dickem Rotor. In der Oberflächenschicht unter dem jeweiligen Magnet werden Wirbelströme induziert, die hauptsächlich den Breitseiten der Magnete folgen und dann an den kurzen Enden als eine etwas modifizierte Ellipse aufeinandertreffen. Da die Ströme etwas über die Oberfläche "verschmiert" sind, ist es nicht ganz korrekt, bei den Wirbelströmen von irgendeiner speziellen Form zu reden, aber das o.a. Bild ist hier anwendbar. Für eine dicke Scheibe spielt die Rotationsrichtung der Ströme keine Rolle. Wenn jedoch die Scheibe dünner hergestellt wird, so ersieht man aus Abb. 4, daß die Oberflächenschichten, in denen die Ströme verlaufen, sich überschneiden. Wenn die Scheibe ausreichend dünn ist, und die Ströme in verschiedenen Richtungen rotieren, das heißt, wenn die Magnete entgegengerichtet sind, heben die Ströme einander auf, und alle Kräfte werden gleich null einschließlich der Reibung. Es ist klar, daß dies nicht der Fall sein kann, wenn die Scheibe dick ist oder wenn sich die beiden Wirbelströme jeweils auf ihre Scheibe verteilen, wie bei dem US-Patent 3.811.740, Abb. 4. Wenn die vorliegende Anordnung irgendeiner Störung ausgesetzt wird und sich einer der Magneten nähert, wird der entsprechende Wirbelstrom die Überhand gewinnen und eine stabilisierende Kraft, die die Scheibe zurückführen wird, auslösen.

Es wurde oben angeführt, daß das dazwischenliegende Bauteil "ausreichend dünn" sein soll, damit die Ströme einander aufheben. In der Elektronik wird es als Eindringtiefe bezeichnet, wenn ein magnetisches Feld in einen elektrischen Leiter eindringt oder üblicher "skin depth" $d_{skin}$.

Wenn die Ströme von dem Magnetfeld induziert werden, so verlaufen diese gleich tief. Die Eindringungsstiefe ist abhängig von der Leitfähigkeit des Materials und der Frequenz des beaufschlagten Feldes. Die Dicke der Scheibe ist daher davon abhängig, was man optimieren will. Ca. 0,7 $d_{skin}$ sollte für die meisten Anwendungen geeignet sein. Wir gehen hier nicht näher darauf ein, wie man dann die Frequenz ausrechnet, die $d_{skin}$ zugrundeliegt. Wenn sich die Scheibe als so dünn erweist, daß sie schwer herzustellen ist oder eine zu schlechte Biegefestigkeit hat, so kann sie als ein Laminat aus beispielsweise Isolator-Metallfolie-Isolator hergestellt werden. Glasfaser oder LCP-verstärktes, keramisches Material ist für solche Isolatoren mit hoher Festigkeit gut geeignet.

In Fällen, in denen man ein hohes Bremsmoment, d.h. eine starke Reibung, beispielsweise beim Abbremsen wünscht, läßt sich dies mit der vorliegenden Erfindung einfach erreichen, indem ganz einfach der eine Magnethalter in Relation zu dem anderen so gedreht wird, daß sich die Magnete nicht mehr gegenüber befinden. Das größte Bremsmoment erzielt man, wenn die Nordpole genau gegenüber den Südpolen stehen und umgekehrt. Wenn die vorliegende Anordnung so konstruiert wird, daß die beiden Halter leicht drehbar sind, erhält man ein Lager mit einem variablen Bremsmoment. Die kann nicht erreicht werden, wenn die elektrisch leitende Scheibe dick ist oder aus zwei Scheiben rund um einen rotierenden Magnethalter besteht, da die Rotationsrichtung der Wirbelströme im letzteren Falle keine Rolle spielt, weil sie keinerlei Kontakt miteinander haben.

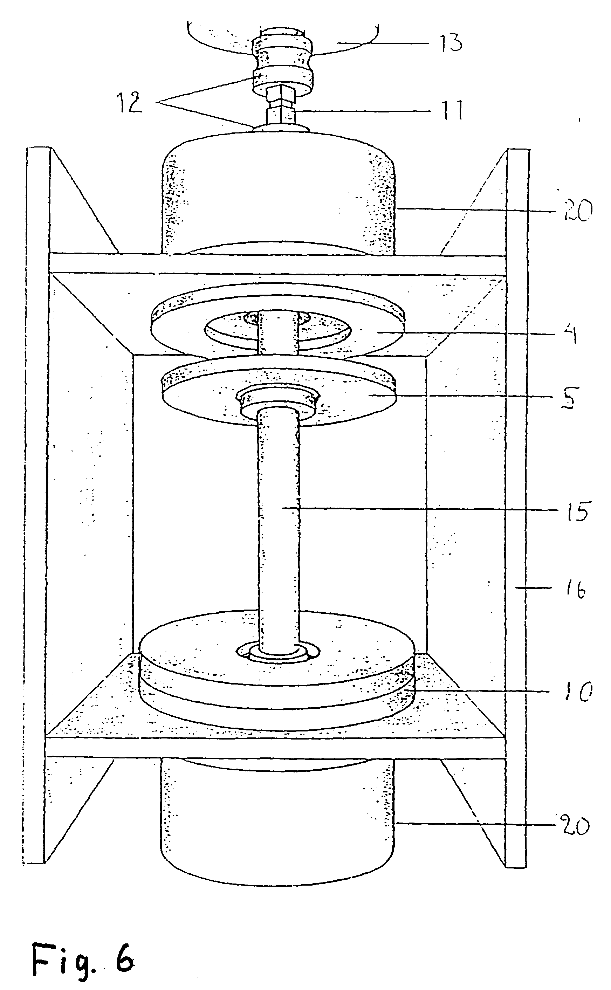

Statische Kräfte werden die Scheibe kontinuierlich aus ihrem Zentrum verschieben und führen dadurch zu einer kontinuierlich hohen Reibung. Die Lösung ist, das Lager dadurch von allen statischen Kräften zu entlasten, daß sie mit einer Entlastungsvorrichtung, beispielsweise nach Abb. 2a oder 2b, angehoben werden. Die letztgenannte Lösung ist gleichwertig mit der Konstruktion in Abb. 6, Pos. 4 und 5 und weist hohe Übereinstimmungen mit der Vorrichtung von US-Patent 3.811.740 Spalte 1, Zeilen 32 - 36, auf. Diese Vorrichtungen haben alle jedoch den Nachteil, daß sie instabil sind und der Stabilität der vorliegenden Konstruktion entgegen wirken. Dieses Problem ist am einfachsten dadurch zu lösen, daß die Entlastungsvorrichtung wie das Lager in Abb. 1a hergestellt wird, mit dem Unterschied, daß man den rechten Magneten dreht. Der mittlere Magnet, der auf dem Rotor montiert ist, wird dann von dem rechten Magneten angezogen und wird von dem linken so abgestoßen, daß der Rotor nach rechts entlastet wird ohne daß die Stabilität des Rotors beeinträchtigt wird. Auch dies ist neu und wesentlich für die Lösung der Aufgabe.

Eine Weiterentwicklung der magnetischen Entlastungsvorrichtung besteht darin, zwei (oder mehr) supraleitende Magnete statt Permanentmagnete und/oder Eisen zu verwenden. Dies sollte die Entlastung von maximal einigen Tonnen bis auf hunderte Tonnen steigern. Eine Anwendung dieser Entlastungsvorrichtung könnte den Anwendungsbereich des Actidynlagers, das maximal 20 Tonnen mit der Technik, die heute zur Anwendung kommt, bewältigt, erweitern.

Außer der Entlastungsvorrichtung müssen bei niedrigen Drehzahlen auch Stützlager, beispielsweise Gleitlager, Kugellager oder konische Rollenlager zur Anwendung kommen, da die vorliegende Erfindung am besten bei hohen Drehzahlen funktioniert. Diese sind so zu montieren, daß sie ihren "Griff" auf die Welle loslassen, wenn die Drehzahl ausreichend hoch ist, damit die Vorrichtung nach der vorliegenden Erfindung die Welle zentrieren kann. Am allerbesten dürfte eine an die Welle montierte Fliehkraftkupplung sein, die bei niedrigen Drehzahlen gegen ein mit dem Gehäuse verbundenen Kugellager gepreßt wird. Dieses Kugellager kann dann so plaziert werden, daß die Welle und damit die leitende Scheibe in der vorliegenden Erfindung auch beim Start mit einem möglichst geringen Bremsmoment zentriert läuft. Eine Tatsache, die wünschenswert ist, aber mit den Stützlagertypen im US-Patent 3.811.740, Spalte 4, Zeilen 37 - 54, nicht möglich ist.

Abb.6 zeigt eine vollständige Lagerung einer Welle, bei der zwei Radiallager 20, ein Axiallager 10 und mindestens eine Entlastungsvorrichtung 4, 5 notwendig sind. Die Abbildung zeigt auch eine axial- und radialbewegliche Kupplung 11, 12, "spline" genannt, die zwischen der Welle und dem Motor 13 erforderlich ist, damit das Lager schwingungsfrei läuft.

Der Rotor wird jedoch vorzugsweise direkt auf der Welle montiert. Diese sollte dann so konstruiert sein, daß keinerlei mechanischer Kontakt zwischen Rotor und Stator besteht. In der Abbildung sind keine Stützlager und keine Schwingungsdämpfer dargestellt, welche manchmal notwendig sein können.

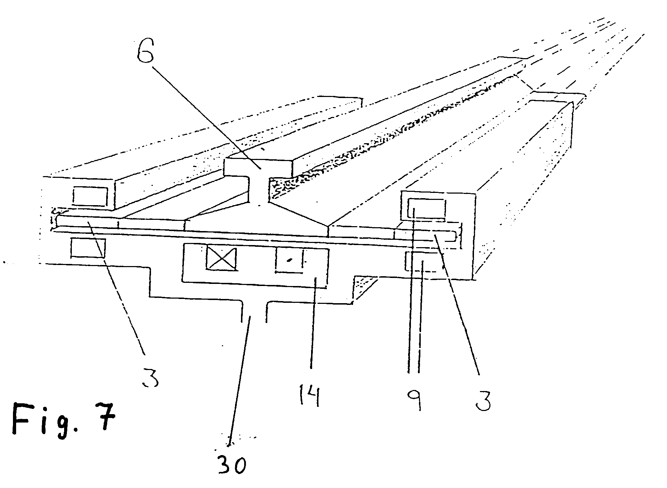

Eine sehr wichtige Weiterentwicklung dieses Lagerungsprinzips ist die Konstruktion von Linearlagern für Magnetschwebezüge. Das japanische Prinzip, das heute zur Anwendung kommt, basiert darauf, daß Induktionskräfte den Zug anheben, während man andere Mittel benutzt, um Stabilität zu erreichen. Dies verursacht eine magnetische Bremskraft, die von derselben Größenordnung ist, wie der Luftwiderstand des Zuges. Die dann zur Anwendung kommende Schiene sollte aus Kupfer bestehen. Wenn man in der vorliegenden Erfindung den Induktionseffekt nur zum Zweck der Stabilisierung und eine Eisenschiene 6 (siehe Abb. 7) auf der Schiene als Entlastungsvorrichtung, gemeinsam mit den im Zug befindlichen Magneten 14, einsetzt, so kann die Schiene und die eben genannte Schiene 6 aus Aluminium hergestellt werden. Die Bremskraft wird minimal und hauptsächlich von den Wirbelströmen in der Schiene verursacht. Dieser Effekt läßt sich jedoch leicht beträchtlich verringern. Darüber hinaus erhält man ein stabiles System und spart an der kostspieligen aktiven Magnetstabilisierung, die man sonst benötigen würde. Es ist schon seit längerem bekannt, daß man stattdessen Stützräder zur Stabilisierung einsetzt. Diese sind aber nach der vorliegenden Erfindung nicht notwendig. Dagegen brauchen der japanische Magnetzug und die vorliegende Erfindung Räder in Zusammenhang mit Start und Stop. Im Hinblick auf den Luftwiderstand werden diese eingezogen, wenn sie nicht benutzt werden. Die japanischen Züge ziehen diese bei 80 km/h ein. Bei dem Schienensystem nach der vorliegenden Erfindung können diese jedoch wesentlich früher eingezogen werden, da die Induktionskräfte den Zug nicht anzuheben brauchen.

Eine Vorrichtung nach der vorliegenden Erfindung kann, wenn sie als rotierendes Lager zur Anwendung kommen, in vielen Bereichen der Technik eingesetzt werden. Nicht nur in den genannten Zentrifugalpumpen und Separatoren, sondern auch in Ultrazentrifugen, Schwenkrädern, Turbomolekularpumpen, Turbopumpen in der Kryotechnik, Spindeln für rotierende Spiegel, Röntgenröhren u.a.

Die vorliegende Erfindung ist nicht auf die aufgezeigten und beschriebenen Ausführungsformen beschränkt, sondern läßt sich innerhalb des Rahmens der nachfolgenden Ansprüche auf mehrere Weise variieren. Verschiedene Legierungen im Rotor und verschiedene Magnetmaterialien sind natürlich denkbar. Es ist auch möglich, die Wirbelströme auf vorgegebene Bahnen zu "verriegeln", beispielsweise in der integrierten Elektronik ohne vom Induktionsprinzip abzugehen. Eine Verbesserung der Funktion des Induktionslagers erzielt man durch Kühlung des Rotors. Die Leitfähigkeit nimmt dann wesentlich zu, was die Reibung verringert und die Niedriggeschwindigkeitseigenschaften verbessert. Wenn flüssige Luft als Kühlmedium zur Anwendung kommt, wird die Reibung um ca. einen Faktor vier verringert.

**Patentansprüche**

1. Vorrichtung, bestehend aus mindestens einer Stabilisierungsvorrichtung (10, 20, 30) und vorzugsweise mindestens einer Entlastungsvorrichtung (4, 5, 6, 14) zur Aufnahme beispielsweise des Eigengewichts einer Welle bzw. statischer Kräfte, wobei die Stabilisierungsvorrichtung (10, 20, 30) aus auf jeder Seite eines dazwischenliegenden unmagnetischen, elektrisch leitenden Materials (1, 2, 3), beispielsweise in flacher Form (1, 3) oder in Form eines Hohlzylinders (2), paarweise angeordneten Magneten (7, 8, 9), die entgegengerichtete Wirbelströme in das genannte Material induzieren, besteht und das Material (1, 2, 3) in der Mitte zwischen den Magneten (7, 8, 9) zentriert ist und wenn das Material (1, 2, 3) sich von seiner zentrierten Lage verschiebt, die Wirbelströme, die das Material (1, 2, 3) zurückführen wollen, die Überhand gewinnen und so eine stabilisierende Kraft ausüben, dadurch gekennzeichnet, daß die Stärke des Materials (1, 2, 3) maximal der magnetischen Eindringungstiefe entspricht, und die Magnete so ausgerichtet sind, daß im normalen Betriebszustand die genannten Wirbelströme weitgehend einander aufheben und keine wesentlich bremsenden Kräfte erzeugen.

2. Vorrichtung nach Patentanspruch 1, dadurch gekennzeichnet, daß die Magnete (7, 8, 9) aus Permanentmagneten und/oder Elektromagneten bestehen.

3. Vorrichtung nach Patentanspruch 2, dadurch gekennzeichnet, daß die Elektromagnete (7, 8, 9) im Anfangsstadium mit Wechselstrom gespeist werden, um die Eigenschaften bei geringer Geschwindigkeit zu verbessern.

4. Vorrichtung nach einem der Patentansprüche 2 oder 3, dadurch gekennzeichnet, daß die Elektromagnete (7, 8, 9) aktiv gesteuert sind.

5. Vorrichtung nach einem der Patentansprüche 2 - 4, dadurch gekennzeichnet, daß die Elektromagnete (7, 8, 9) aus Supraleitern hergestellt sind.

6. Vorrichtung nach einem der Patentansprüche 1 - 5, dadurch gekennzeichnet, daß das dazwischenliegende Material (1, 2, 3) in Form integrierter Schaltkreise vorliegt.

7. Vorrichtung nach einem der Patentansprüche 1 - 6, dadurch gekennzeichnet, daß das dazwischenliegende Material aus einer rotierenden Scheibe (1) zur Bildung einer axialen Stabilisierungsvorrichtung (10) besteht.

8. Vorrichtung nach einem der Patentansprüche 1 - 6, dadurch gekennzeichnet, daß das dazwischenliegende Material aus einem rotierenden Hohlzylinder (2) zur Bildung einer radialen Stabilisierungsvorrichtung (20) besteht.

9. Vorrichtung nach einem der Patentansprüche 1 - 6, dadurch gekennzeichnet, daß das dazwischenliegende Material aus einem oder mehreren Balken, Blech(en) u.ä. (3) besteht, und daß die Vorrichtung speziell für ein Linearlager (30) vorgesehen ist.

10. Vorrichtung nach einem der Patentansprüche 1 - 8, dadurch gekennzeichnet, daß die Entlastungsvorrichtung aus mindestens einem festen Ringmagneten (4) sowie einem oder mehreren auf der Welle befestigten Ringmagneten (5) oder Eisenscheiben besteht.

11. Vorrichtung nach einem der Patentansprüche 1 - 8, dadurch gekennzeichnet, daß sie zwei radiale Stabilisierungsvorrichtungen (20) (Radiallager), eine axiale Stabilisierungsvorrichtung (10) (Axiallager) und eine oder mehrere Entlastungsvorrichtungen umfaßt.

12. Vorrichtung nach einem der vorhergehenden Patentansprüche, dadurch gekennzeichnet, daß zusätzlich ein oder mehrere konventionelle(s) Magnetlager und/oder mechanische(s) Lager vorgesehen sind.

13. Vorrichtung nach Patentanspruch 9, dadurch gekennzeichnet, daß sie für Linearlager (30) vorgesehen ist, welche bei Transportmitteln, wie beispielsweise bei einem Magnetschwebezug, zur Anwendung kommen.

14. Vorrichtung nach einem der vorhergehenden Patentansprüche, dadurch gekennzeichnet, daß die Magnete (7, 8, 9) auf der einen Seite des dazwischenliegenden Materials (1, 2, 3) so montiert sind, daß sie relativ zu den entsprechenden Magneten auf der anderen Seite bei Radial- und Axiallagern verdrehbar und bei Linearlagern verschiebbar sind und so ein variables Bremsmoment entsteht.

15. Vorrichtung nach einem der Patentansprüche 1-8, 10-12 und 14, dadurch gekennzeichnet, daß eine Kupplung nach der Art einer Fliehkraftkupplung auf der Welle (15) angebracht ist, die bei niedriger Drehzahl in ein mechanisches Lager, welches am Gehäuse befestigt ist, eingreift, um die Welle bei niedrigen Drehzahlen in der richtigen Position zu zentrieren, so daß die Bremskraft bei allen Drehzahlen minimiert sind.

## Claims

1. An apparatus comprising at least one stabilising device (10, 20, 30) and preferably at least one relief means (4, 5, 6, 14) to take up, for example, the dead weight of a shaft and/or static forces, wherein the stabilising device (10, 20, 30) comprises magnets (7, 8, 9) which are arranged in pairs at each side of an intermediate, non-magnetic, electrically conductive material (1, 2, 3), for example in a flat form (1, 3) or in the form of a hollow cylinder (2), and which induce opposed eddy currents in the said material, and the material (1, 2, 3) is centred midway between the magnets (7, 8, 9) and, when the material (1, 2, 3) is displaced from its centred position, the eddy currents, tending to guide the material back, gain the upper hand and thus exert a stabilising force, characterised in that the maximum strength of the material (1, 2, 3) corresponds to the magnetic penetration depth, and the magnets are aligned so that in the normal operating state the said eddy currents largely counterbalance each other and do not produce any substantially braking forces.

2. The apparatus of claim 1, characterised in that the magnets (7, 8, 9) comprise permanent and/or electromagnets.

3. The apparatus of claim 2, characterised in that the electromagnets (7, 8, 9) are supled with direct current at the initial stage in order to improve the properties at low speed.

4. The apparatus of claim 2 or 3, characterised in that the electromagnets (7, 8, 9) are actively controlled.

5. The apparatus of any of claims 2 to 4, characterised in that the electromagnets (7, 8, 9) are made from superconductors.

6. The apparatus of any of claims 1 to 5, characterised in that the intermediate material (1, 2, 3) is in the form of integrated circuits.

7. The apparatus of any of claims 1 to 6, characterised in that the intermediate material comprises a rotating disc (1) to form an axial stabilising device (10).

8. The apparatus of any of claims 1 to 6, characterised in that the intermediate material comprises a rotating hollow cylinder (2) to form a radial stabilising device (20).

9. The apparatus of any of claims 1 to 6, characterised in that the intermediate material comprises one or more spars, sheets and the like (3), and that the apparatus is provided specially for a linear bearing (30).

10. The apparatus of any of claims 1 to 8, characterised in that the relief means comprises at least one stationary annular magnet (4) and one or more annular magnets (5) or iron discs fixed to the shaft.

11. The apparatus of any of claims 1 to 8, characterised in that it includes two radial stabilising device (20) (radial bearings), one axial stabilising device (10) (axial bearing) and one or more relief means.

12. The apparatus of any of the preceding claims, characterised in that one or more conventional magnetic bearings and/or mechanical bearings are additionally provided.

13. The apparatus of claim 9, characterised in that it is provided for linear bearings (30) which are used in transportation means such as a magnetically levitated train.

14. The apparatus of any of the preceding claims, characterised in that the magnets (7, 8, 9) are mounted at one side of the intermediate material (1, 2, 3), in such a way that they are rotatable in the case of radial and axial bearings and displaceable in the case of linear bearings, relative to the corresponding magnets at the other side, and a variable braking torque is thus exerted.

15. The apparatus of any of claims 1 - 8, 10 - 12 and 14, characterised in that a coupling akin to a centrifugal clutch is mounted on the shaft (15) and engages in a mechanical bearing fixed to the casing at low speed, in order to centre the shaft in the correct position at low speeds so that the braking force is minimised at all speeds.

## Revendications

1. Dispositif se composant d'au moins un dispositif de stabilisation (10, 20, 30) et de préférence d'au moins un dispositif de décharge (4, 5, 6, 14) pour recevoir par exemple le poids propre d'un arbre ou des forces statiques, le dispositif de stabilisation (10, 20, 30) se composant d'aimants (7, 8, 9) qui sont disposés par paires sur chaque côté d'une matière intercalée, électriquement conductrice non magnétique (1, 2, 3), par exemple sous forme plate (1, 3) ou sous forme de cylindre creux (2) et qui induisent des courants de Foucault de sens opposés dans la matière mentionnée ci-dessus, et la matière (1, 2, 3) intercalée entre les aimants (7, 8, 9) étant centrée et les courants de Foucault qui tendent à ramener la matière (1, 2, 3) devenant dominants lorsque la matière (1, 2, 3) se décale par rapport à sa position centrée et exerçant donc une force stabilisatrice, caractérisé en ce que l'épaisseur de la matière (1, 2, 3) correspond au maximum à la profondeur de pénétration magnétique et les aimants sont orientés d'une manière telle que les courants de Foucault mentionnés ci-dessus se compensent entre eux dans une large mesure en état de fonctionnement normal et n'exercent aucune force sensible de freinage.

2.  Dispositif selon la revendication 1, caractérisé en ce que les aimants (7, 8, 9) se composent d'aimants permanents et/ou d'électro-aimants.

3.  Dispositif selon la revendication 2, caractérisé en ce que les électro-aimants (7, 8, 9) sont alimentés en courant alternatif au stade initial, afin d'améliorer les propriétés à faible vitesse.

4.  Dispositif selon l'une des revendications 2 ou 3, caractérisé en ce que les électro-aimants (7, 8, 9) sont à réglage actif.

5.  Dispositif selon l'une des revendications 2 à 4, caractérisé en ce que les électro-aimants (7, 8, 9) sont fabriqués à partir de supraconducteurs.

6.  Dispositif selon l'une des revendications 1 à 5, caractérisé en ce que la matière intercalée (1, 2, 3) est réalisée sous forme de circuits intégrés.

7.  Dispositif selon l'une des revendications 1 à 6, caractérisé en ce que la matière intercalée se compose d'un disque tournant (1) pour former un dispositif axial de stabilisation (10).

8.  Dispositif selon l'une des revendications 1 à 6, caractérisé en ce que la matière intercalée se compose d'un cylindre creux tournant (2) pour former un dispositif radial de stabilisation (20).

9.  Dispositif selon l'une des revendications 1 à 6, caractérisé en ce que la matière intercalée se compose d'une ou plusieurs poutre(s), tôle(s) et similaires (3) et en ce que le dispositif est spécialement prévu pour un palier linéaire (30).

10.  Dispositif selon l'une des revendications 1 à 8, caractérisé en ce que le dispositif de décharge se compose d'au moins un aimant annulaire fixe (4) et un ou plusieurs aimants annulaires (5) ou disques ferreux fixés sur l'arbre.

11.  Dispositif selon l'une des revendications 1 à 8, caractérisé en ce qu'il comprend deux dispositifs radiaux de stabilisation (20) (paliers radiaux), un dispositif axial de stabilisation (10) (palier axial) et un ou plusieurs dispositifs de décharge.

12.  Dispositif selon l'une des revendications précédentes, caractérisé en ce qu'un ou plusieurs palier(s) magnétique(s) et/ou palier(s) mécanique (s) classique(s) sont en outre prévus.

13.  Dispositif selon la revendication 9, caractérisé en ce qu'il est prévu pour des paliers linéaires (30) qui sont utilisés pour des moyens de transport, par exemple pour un train à suspension magnétique.

14.  Dispositif selon l'une des revendications précédentes, caractérisé en ce que les aimants (7, 8, 9) sont montés sur l'un des côtés de la matière intercalée (1, 2, 3) d'une manière telle qu'ils peuvent être tournés dans le cas de paliers radiaux ou axiaux, ou être décalés dans le cas de paliers linéaires, par rapport aux aimants correspondants situés sur l'autre côté et qu'il en résulte un couple de freinage variable.

15.  Dispositif selon l'une des revendications 1 à 8, 10 à 12 et 14, caractérisé en ce qu'un accouplement du type accouplement à force centrifuge, qui vient à faible vitesse de rotation au contact d'un palier mécanique qui est fixé sur le carter, est monté sur l'arbre (15) afin de centrer l'arbre dans la position correcte à faibles vitesses de rotation, de façon que la force de freinage soit minimisée à toutes les vitesses de rotation.

Fig. 1a

Fig. 1b

Fig. 2a

Fig. 2b

Fig. 3

Fig. 4

Fig. 5a

Fig. 5b

Fig. 6

Fig. 7